# EUROPÄISCHE PATENTSCHRIFT

(11) **EP 2 019 768 B1**
(45) Veröffentlichungstag und Bekanntmachung des Hinweises auf die Patenterteilung: **06.10.2010**
(21) Anmeldenummer: 07728494.1
(22) Anmeldetag: 25.04.2007
(51) Int. Cl.: B60W 30/18, F16H 61/02, F16H 59/18, B60W 10/06, B60W 10/10

(54) **VERFAHREN UND VORRICHTUNG ZUR STEUERUNG EINES AUTOMATISIERTEN SCHALTGETRIEBES**
METHOD AND DEVICE FOR CONTROLLING AN AUTOMATED GEARBOX
PROCÉDÉ ET DISPOSITIF DE COMMANDE D'UNE BOÎTE DE VITESSES AUTOMATIQUE

(30) Priorität: 24.05.2006 DE 102006024277
(43) Veröffentlichungstag der Anmeldung: 04.02.2009
(73) Patentinhaber: ZF Friedrichshafen AG, 88038 Friedrichshafen (DE)
(72) Erfinder: DOEBELE, Bernd, 88682 Salem (DE); WIENCEK, Norbert, 88709 Hagnau (DE)
(86) Internationale Anmeldenummer: PCT/EP2007/054038
(87) Internationale Veröffentlichungsnummer: WO 2007/134942

(56) Entgegenhaltungen:
- EP-A- 1 248 021
- EP-A2- 0 634 591
- DE-A1- 4 006 451
- FR-A1- 2 847 636
- GB-A- 2 324 578
- US-A- 5 517 410

## Beschreibung

Die Erfindung betrifft ein Verfahren und eine Vorrichtung zur Steuerung eines automatisierten Schaltgetriebes gemäß dem Oberbegriff des Patentanspruchs 1, bzw. 12, wie aus der FR 2847636 bekannt.

Automatisierte Schaltgetriebe werden seit geraumer Zeit in unterschiedlichen Kraftfahrzeugtypen genutzt. Ein solches automatisiertes Schaltgetriebe wird dazu von einer Steuerungsvorrichtung mittels geeigneter Aktuatoren betätigt. Hierfür bildet die Steuerungsvorrichtung auf der Grundlage einer Bewertung von Fahrerwünschen und des Fahrzeugverhaltens in Bezug auf motorische Eingangsgrößen Gangwechselbefehle, und legt den Zeitpunkt für den durchzuführenden Gangwechsel fest.

In der Praxis werden beispielsweise die Geschwindigkeit des Fahrzeugs, die Motordrehzahl, die Motorleistung, das Drehmoment oder ähnliche Parameter, die Stellung eines Fahrpedals und gegebenenfalls von Gangwahlbedienelementen eingelesen, und auf der Grundlage des momentanen Zustandes oder vereinzelt auch auf der Basis der zeitlichen Entwicklung der Parameter daraufhin überwacht, ob ein Gangwechsel erfolgen soll. Dementsprechend kann ein Gangwechsel stets als Strategie zur Vermeidung oder zur Abhilfe eines Mangels in Form eines nicht optimalen Fahrgangs aufgefasst werden.

Bei üblichen Getriebesteuerungsvorrichtungen werden letztlich jeweils Grenzwerte überwacht, bei deren Erreichen oder Überschreiten eine durch die Grenzwerte und die Art derer Über- bzw. Unterschreitung eine definierte Aktion in Form z.B. eines Gangwechsels in einen bestimmten Gang, ausgelöst wird. Diese Aktion wird dann bei bekannten Steuerungssysiemen "sofort" **-** also im Sinne von unter den technischen Gegebenheiten und im Rahmen vernünftiger technischer Lösungen ohne weitere Verzögerung - durchgeführt.

Verbesserte Varianten einer derartigen Steuerungsvorrichtung mögen eine vorausschauendere Festlegung bzw. Vorbereitung eines anstehenden Gangwechsels beinhalten. Dies ändert jedoch nichts an dem grundsätzlichen Ablauf, dass vor Einleitung einer Schaltsequenz auf der Basis der eingelesenen Daten bei Erreichen bzw. Passieren von Schwellwerten eine konkrete Schaltsequenz, beispielsweise ein Schalten in den nächsthöheren Gang, festgelegt wird. Dies geschieht bei verbesserten Getriebesteuerungsverfahren lediglich zu einem vergleichsweise früheren Zeitpunkt und auf Grundlage von z.B, mathematisch-technischen Modellen, die eine Prognose für in naher Zukunft wahrscheinliche Betriebszustände ermöglichen. Auch bei solchen Verfahren steht bei der Einleitung eines Gangwechsels stets schon fest, in welchen Gang geschaltet werden soll.

Obwohl sich eine derartige Steuerung automatisierter Schaltgetriebe in der Vergangenheit vielfach bewährt hat, ist sie dennoch mit Mängeln behaftet.

So ist ein entscheidendes Kriterium für die Wahl eines Fahrganges oder einen durchzuführenden Gangwechsel aktuell die abgeforderte Leistung des Fahrzeugmotors. Diese Leistung wird bisher zumeist auf der Grundlage von Tabellen oder Modellen der Motorsteuerung aus einer Vielzahl direkt messbarer oder sonst wie bekannter Parameter, wie etwa der Motordrehzahl, dem Zündwinkel, der Kraftstoff-Einspritzmenge und dem Kraftstoff-Einspritzzeitpunkt ermittelt.

In Kombination mit bekannten Daten, z.B. über die Übersetzungsverhältnisse aktuell alternativer Fahrgänge und der Fahrzeuggeschwindigkeit, ermittelt die Steuerungsvorrichtung des automatisierten Getriebes daraufhin einen oder mehrere Grenzwerte bei deren Erreichung das Schalten in einen anderen Getriebegang Vorteile in Bezug auf jeweils definierte Zielgrößen, wie Getriebegang Vorteile in Bezug auf jeweils definierte Zielgrößen, wie etwa den Kraftstoffverbrauch, die Motorabnutzung, die maximale Beschleunigungsfähigkeit oder die Schalthäufigkeit bietet.

Alternativ dazu können nach einem vereinfachten Verfahren auch wesentliche Motorparameter auf eine Erreichung von Grenzwerten überwacht und z.B. bei Erreichen einer Drehzahlgrenze ein entsprechender Gangwechsel durchgeführt werden.

Die tatsächlich an den Fahrzeugrädern benötigte Leistung unter Einbeziehung des tatsächlichen Fahrzeuggewichtes, der Steigung, der Rollwiderstände und des Luftwiderstandes wird bei den vorstehend beschriebenen Verfahren allenfalls auf umständliche, rechenintensive und fehlerbehaftete Weise ermittelt bzw. berücksichtigt.

Dies ist insbesondere bei Fahrzeugen für den Gütertransport besonders relevant, da sich bei diesen die Zuladung und damit der aktuelle Leistungsbedarf in Abhängigkeit von der Fahrbahnsteigung und dem Rollwiderstand stark ändert, sowie gleichzeitig ein relativ großer Luftwiderstand in Verbindung mit der auf das Fahrzeug aktuell wirkenden Windgeschwindigkeit und Windrichtung einen erheblichen Einfluss auf einen optimalen Gangwechsel ausüben kann.

So kann es bei bisherigen Getriebesteuerungen vorkommen, dass beispielsweise bei einem schwer beladenen Lastkraftwagen an einer Steigung mit dem Erreichen einer bestimmten Drehzahlgrenze oder anderer Parameter ein Schalten in den nächsthöheren Gang ausgelöst wird. Durch die bei fast allen Getriebearten beim Gangwechsel unvermeidliche Zugkraftunterbrechung kann der zuvor festgelegte Zielgang aufgrund einer zwischenzeitlich erheblich verlangsamten Fahrgeschwindigkeit nicht mehr optimal und die Beschleunigungsfähigkeit des Fahrzeugs aufgrund der sich ergebenden geringen Motordrehzahl sehr gering sein.

In sehr ungünstigen Betriebssituationen kann es insbesondere im Baustellenverkehr oder an steilen Rampen vorkommen, dass der Zielgang entweder gar nicht mehr eingelegt werden kann, da z.B. die minimale Drehzahl des Antriebsmotors unterschritten würde, oder dass die durch den Antriebsmotor im Zielgang bereitstellbare Leistung nicht ausreicht, um die Geschwindigkeit des Lastkraftwagens wenigstens zu halten. In diesen Fällen erfolgt entweder ein sofortiger erneuter Gangwechsel oder ein Abbruch des Schaltvorganges mit einer entsprechend verlängerten Zugkraftunterbrechung. In beiden Fällen kann es insbesondere an steilen Rampen und bei hoher Beladung vorkommen, dass eine Rückschaltung in den ursprünglichen Gang zu diesem Zeitpunkt nicht mehr ausreichend ist.

Im günstigsten Fall wird dies durch die Getriebesteuerungseinheit erkannt und von Beginn an um wenigstens zwei Gänge zurückgeschaltet. Im ungünstigsten Fall erfolgt ein erneuter Schaltversuch, der aufgrund der zwischenzeitlich eingetretenen weiteren Verlangsamung des Fahrzeugs wiederum abgebrochen werden muss, und letztlich das Fahrzeug bis zum Stillstand abbremsen oder sogar zurückrollen lassen kann. Ein dann durchzuführendes Anfahren unter voller Beladung an einer steilen Rampe ist auch für moderne und robuste Kupplungen mit einem erheblichen und kostspieligen Verschleiß verbunden.

Zur Vermeidung dieser Problematik wurden bisher hauptsächlich so genannte Patch-Lösungen vorgeschlagen, die entweder mit Hilfe von häufig kostspieligen weiteren Sensoren für die Erfassung der Beladung und der Fahrbahnsteigung in bestimmten Fällen ein abgewandeltes Schaltverhalten erzwingen, oder auf ein rechtzeitiges manuelles Eingreifen des Fahrers angewiesen sind, indem dieser beispielsweise manuell ein Schalten in einen höheren Gang unterbindet.

Vor diesem Hintergrund liegt der Erfindung die Aufgabe zugrunde, ein Steuerungsverfahren für ein automatisiertes Schaltgetriebe vorzustellen, mit dem auf einfache Weise eine Berücksichtigung der tatsächlich für eine Konstanthaltung der Fahrgeschwindigkeit benötigten Antriebsleistung für die Ermittlung des zu wählenden Ganges herangezogen wird. Weiter liegt der Erfindung die Aufgabe zu Grunde, die Auswahl eines Zielganges zeitlich von einer Auslösung eines Gangwechsels zu entkoppeln, und so eine höhere Flexibilität sowie eine zeitnähere und damit sachgerechtere Auswahl eines Zielganges zu ermöglichen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich die zur Konstanthaltung der Fahrzeuggeschwindigkeit benötigte Antriebsleistung auf einfache Weise ausreichend genau ermitteln lässt, wenn die Leistung des Antriebsmotors definiert verringert oder auf den Wert Null reduziert und die resultierende Geschwindigkeitsänderung des Fahrzeugs ermittelt wird.

Diese zur Konstanthaltung der Fahrgeschwindigkeit benötigte Leistung wird im Folgenden auch kurz als so genannte "Konstantleistung" bezeichnet und ist eine fahrwiderstandsproportionale Größe. Diese Konstantleistung ermöglicht eine sachgerechtere sowie zeitlich spätere Auswahl eines einzulegenden Zielgangs und ermöglicht so ein gemäß den gewählten Zielgrößen optimiertes Schaltverhalten.

Diese Konstantleistung braucht dabei keine Leistung im physikalischen Sinne zu sein, sondern lediglich in einem bekannten und möglichst einfachen Verhältnis zu der physikalisch benötigten Leistung zur Konstanthaltung der Geschwindigkeit zu stehen. An Stelle einer ermittelten Arbeit pro Zeiteinheit kann beispielsweise auch eine Arbeit je Streckeneinheit ermittelt werden, die aufgrund der bekannten Fahrgeschwindigkeit entweder leicht in eine Arbeit pro Zeiteinheit umgerechnet oder in einem entsprechenden Programm auch direkt verarbeitet werden kann. Daneben sind auch weitere Parametrisierungen der Konstantleistung denkbar, denen jedoch gemein ist, dass ihnen die Geschwindigkeitsabnahme des Fahrzeugs in Folge einer definierten Verringerung der Antriebsleistung und die Einwirkung des aktuellen Fahrwiderstandes zu Grunde liegt.

Demnach geht die Erfindung aus von einem Verfahren zur Steuerung eines automatisierten Schaltgetriebes, bei dem eine Getriebesteuerungseinrichtung vorgesehen ist, welche auf der Grundlage von Eingangssignalen an geeignete Aktuatoren Stellsignale ausgibt, die eine Schaltsequenz des automatisierten Schaltgetriebes auslösen.

Zur eindeutigen Bestimmung des beanspruchten Schutzumfanges sollen im Folgenden einige für die Beschreibung der Erfindung zentrale Begriffe näher bestimmt werden:

Die vorstehend erwähnten Aktuatoren umfassen neben den direkt an der Einstellung des Übersetzungsverhältnisses des automatisierten Schaltgetriebes beteiligten Aktuatoren zumeist auch weitere Aktuatoren, mit deren Hilfe eine Drehmomentübertragung zwischen dem Antriebsmotor und den angetriebenen Rädern des Fahrzeugs gesteuert werden kann, sowie Aktuatoren, welche die Leistungsabgabe des Antriebsmotors gezielt verändern können.

Es ist dabei im Rahmen dieser Erläuterungen unerheblich, ob beispielsweise ein Kupplungsaktuator für eine Reibkupplung zwischen Antriebsmaschine und automatisiertem Schaltgetriebe direkt durch ein Signal der Getriebesteuerungseinrichtung angesteuert wird, oder diese lediglich ein Signal an eine weitere Steuerungseinrichtung ausgibt, welche dieses Signal umwandelt sowie gegebenenfalls mit Hilfe weiterer Eingangsgrößen aufbereitet, und dann ihrerseits ein Signal an den Kupplungsaktuator ausgibt. Dies gilt in noch stärkerem Maße für Aktuatoren, welche die Leistungsabgabe des Antriebsmotors gezielt verändern können. Diese Aktuatoren, die beispielsweise die Stellung einer Drosselklappe oder die Einspritzmenge eines Kraftstoffes festlegen, werden üblicherweise von einem separaten Motorsteuerungsgerät angesteuert. Im Rahmen dieser Druckschrift soll es jedoch lediglich auf die - in diesem Fall indirekte -Ausgabe von Signalen zur Beeinflussung der Stellgrößen der Aktuatoren ankommen, gleichgültig, ob diese Signalerzeugung direkt oder über beliebige Zwischenstufen und gegebenenfalls unter Berücksichtigung weiterer Parameter erfolgt.

Der Begriff des Aktuators ist hier entsprechend weit zu fassen. Direkt am automatisierten Schaltgetriebe angreifende Aktuatoren weisen meistens Elektromotore oder hydraulische oder pneumatische Geber, wie Kolben-ZylinderAnordnungen auf, die auf der Grundlage eines Eingangssignals unter Verwendung von Fremdenergie eine gerichtete Kraft aufbringen und eine mechanische Bewegung herbeiführen. Im Rahmen dieser Druckschrift soll unter einem Aktuator allgemein eine Einrichtung verstanden werden, die auf der Grundlage eines Informationssignals mit Hilfe von Fremdenergie eine Veränderung einer mechanischen Größe bewirkt. Daher gilt eine Verstelleinrichtung für einen Zündwinkel oder eine Einrichtung zur Verstellung der Einspritzmenge oder des Einspritzzeitpunktes als ein Aktuator, da diese die abgegebene Leistung des Antriebsmotors auf der Basis eines Informationssignals und unter Verwendung von Fremdenergie direkt beeinflussen können.

Unter einer Schaltsequenz ist in den weitaus häufigsten Fällen das Auslegen eines Getriebeganges und das nachfolgende Einlegen eines Ganges zu verstehen. Dabei durchlaufen übliche automatisierte Schaltgetriebe eine Zugkraftunterbrechung, insbesondere eine Auftrennung des Antriebsstranges durch ein Öffnen einer Reibkupplung, und einen Zustand der Neutralstellung des Getriebes, in dem kein Getriebegang aktiviert ist und dementsprechend keine Momentenübertragung durch das automatisierte Schaltgetriebe stattfindet.

Eine Schaltsequenz umfasst üblicherweise in einer ersten Teilsequenz die Ansteuerung des Antriebsmotors zur Verringerung dessen Antriebsleistung, ein Trennen des Antriebsstranges durch das Öffnen einer Reibkupplung, das Auslegen des zuvor aktiven Ganges und damit das Schalten des Getriebes in dessen Neutralstellung. In einer zweiten Teilsequenz wird ausgehend von der Neutralstellung ein Gang eingelegt und die Antriebsmaschine z.B. so angesteuert, dass eine Synchrondrehzahl im Getriebe erreicht oder eine gewünschte Leistung bereitgestellt werden kann, und die Reibkupplung dann geschlossen.

Im dieser Druckschrift kann eine Schaltsequenz aber auch aus einer dieser ersten und zweiten Teilsequenzen bestehen, etwa wenn ein antriebsloses Rollen des Fahrzeugs entweder mit geöffneter Kupplung und/oder mit dem Getriebe in seiner Neutralstellung gewünscht ist, oder dieser Zustand beendet werden soll.

Zur Lösung der gestellten Aufgabe ist verfahrensgemäß vorgesehen, dass die Getriebesteuerungseinrichtung zunächst auf der Grundlage von Eingangssignalen entscheidet, ob eine Zugkraftreduzierung der angetriebenen Räder des Fahrzeugs ausgelöst werden soll. Sofern dies der Fall ist, gibt sie Signale aus, die eine definierte Zugkraftreduzierung der angetriebenen Räder zur Folge haben. Dies kann wie bereits angedeutet zumeist am einfachsten durch das Öffnen der Kupplung oder durch ein Schalten des Getriebes in dessen Neutralstellung erreicht werden, wobei in beiden Fällen eine Verringerung der Leistung des Antriebsmotors zu veranlassen ist, die auch ohne eine Kupplungsöffnung oder eine Schaltung des Getriebes in dessen Neutralstellung ausreichend sein kann.

Die Getriebesteuerungseinrichtung liest dann Zugkraftreduzierungsdaten ein, aus denen eine Veränderung der Fahrzeuggeschwindigkeit als Reaktion auf die Zugkraftreduzierung abgeleitet werden kann. Dies können beispielsweise die Drehgeschwindigkeit eines Fahrzeugrades, die bei geschlossener Kupplung und eingelegtem Gang sich einstellende Drehzahl des Antriebsmotors als Reaktion auf eine Reduzierung der Antriebsleistung oder eine Veränderung einer anderen geeigneten Drehzahl im Antriebsstrang bzw. deren jeweilige zeitlichen Veränderungen sein.

Die Getriebesteuerungseinrichtung bildet daraus eine mit dem aktuellen Fahrwiderstand des Fahrzeugs direkt korrelierende Fahrwiderstandsgröße beispielsweise die genannte Konstantleistung, und zieht diese Fahrwiderstandsgröße anschließend zur Auswahl eines einzulegenden Zielganges heran.

Dabei ist es, wie ähnlich bereits für die Konstantleistung ausgeführt, nicht notwendig, dass eine physikalisch als Fahrwiderstand definierte Größe ermittelt wird. Aus Gründen der Anschaulichkeit sei jedoch im Folgenden angenommen, dass die Getriebesteuerungseinrichtung eine direkt den Fahrwiderstand ausdrückende Größe in Form einer am Getriebeeingang aufzubringenden Leistung zur Konstanthaltung der Fahrgeschwindigkeit - also eine Konstantleistung - ermittelt.

Die Vorteile des beschriebenen Verfahrens liegen vor allem darin begründet, dass die Getriebesteuerungseinrichtung auf einfache Weise und mit minimalem Aufwand eine mit dem aktuellen Fahrwiderstand korrelierende Größe ermittelt, die direkt zur Wahl des einzulegenden optimalen Zielganges herangezogen werden kann. Die Fahrwiderstandsgröße berücksichtigt dabei so unterschiedliche Faktoren wie die momentane Fahrzeugbeladung, die Steigung der Straße sowie den momentanen Luft- und Rollwiderstand, der wiederum von der Bereifung, der Fahrgeschwindigkeit, der Beladung und dem Straßenzustand abhängig ist.

Dabei ist es zwar möglich, dass zur Verringerung der Gesamtschaltzeit bereits vor oder mit Einleitung der ersten Teilsequenz des Schaltvorganges der wahrscheinlich zu wählende Zielgang schaltungsbezogen vorbereitet wird. Entscheidend ist jedoch, dass die Getriebesteuerungseinrichtung die tatsächliche Entscheidung über den einzulegenden Zielgang erst auf der Grundlage oder zumindest unter Einbeziehung der ermittelten Konstantleistung bzw. des ermittelten Fahrwiderstandswertes trifft.

Auf diese Weise ist es in den weiter oben geschilderten Situationen beispielsweise bei hoher Zuladung und auf einer steilen Rampe durchaus möglich, dass auf der Basis der notwendigen extrem hohen Konstantleistung umgehend wieder der zuvor aktive Gang eingelegt oder aufgrund der zwischenzeitlichen Verlangsamung des Fahrzeugs sogar ein im Vergleich zu dem vormals aktiven Gang niedrigerer Gang gewählt wird:

Ebenso kann die Getriebesteuerungseinrichtung auf diese Weise bei einer bescheunigenden Fahrt auf einer abschüssigen Straße aus dem geringen Fahrwiderstand oder sogar negativen Fahrwiderstand beispielsweise ein Hochschalten um zwei Gangstufen veranlassen, obwohl dies auf einer ebenen Straße unter den gleichen Bedingungen nicht ratsam wäre.

Eine erste Weiterbildung des erfindungsgemäßen Verfahrens sieht vor, dass die Zugkraftreduzierung eine vollständige oder eine nahezu vollständige Zugkraftunterbrechung ist. Dies ist besonders einfach durch ein Öffnen der Reibkupplung zwischen Antriebsmotor und automatisiertem Schaltgetriebe oder auch durch ein Schalten des automatisierten Schaltgetriebes in seine Neutralstellung erreichbar. Dies ermöglicht eine Bestimmung des Fahrwiderstandes auf eine besonders einfache Weise, da bei der Berechnung desselben aus der zeitlichen Änderung der Fahrzeuggeschwindigkeit keine zusätzlichen Momente des Antriebsmotors berücksichtigt zu werden brauchen, die oft ohnehin nicht genau bekannt sind und z.B. bei Anlaufen eines Zusatzaggregates während einer Schaltsequenz großen kurzfristigen Schwankungen unterliegen können.

Alternativ zum Öffnen einer Reibkupplung oder zum Schalten des automatisierten Schaltgetriebes in seine Neutralstellung kann die Getriebesteuerungseinrichtung die Zugkraftreduzierung durch Veranlassung einer Verringerung der pro Zeit einer Antriebsmaschine zugeführten Energiemenge auslösen. Dies ermöglicht eine besonders frühe Ermittlung des Fahrwiderstandes bzw. der Konstantleistung und zudem eine besonders schnelle Reaktion auf eine mögliche starke Verzögerung des Fahrzeugs. Hierfür ist natürlich sicherzustellen, dass eine Drehzahlübertragung zwischen den angetriebenen Rädern und der Abtriebswelle des Antriebsmotors in einem bekannten Übersetzungsverhältnis vorliegt, also insbesondere die Reibkupplung geschlossen und das automatisierte Schaltgetriebe nicht in seine Neutralstellung geschaltet ist.

Insbesondere wenn die Antriebsmaschine eine Verbrennungskraftmaschine im Sinne eines Dieselmotors oder Ottomotors ist, und die Verringerung der pro Zeiteinheit zugeführten Energiemenge durch eine Reduzierung der zugeführten Kraftstoffmenge erfolgt, kann die Zugkraftreduzierung innerhalb kürzester Zeit durch eine Erhöhung der Einspritzmenge wieder aufgehoben werden. Auf diese Weise ist sichergestellt, dass die Geschwindigkeitsverringerung während der Zugkraftverringerung bei Bedarf minimiert werden kann, und z.B. bei einem Betrieb des Fahrzeugs in einem Gang mit für eine Konstanthaltung der Geschwindigkeit gerade noch genügender Leistung keine Rückschaltung aufgrund einer zu starken Verlangsamung notwendig wird.

Die Getriebesteuerungseinrichtung kann die Zugkraftreduzierung der Antriebsmaschine besonders einfach durch eine Verstellung des Zündwinkels und/oder durch eine Veränderung der Einspritzzeit und/oder durch eine Veränderung der Anzahl der befeuerten Zylinder auslösen. Diese Möglichkeiten sind zumeist ohnehin in der Motorsteuerung vorgesehen und bedürfen daher meistens nur einer entsprechenden Anforderung durch die Getriebesteuerungseinrichtung.

Eine andere Ausgestaltung des Verfahrens sieht vor, dass die Getriebesteuerungseinrichtung die Zugkraftreduzierung der Antriebsmaschine durch das Öffnen der schaltbaren Kupplung zwischen der Antriebsmaschine und dem automatisierten Schaltgetriebe des Fahrzeugs bewirkt. Dies schließt eine Einflussnahme durch eingeleitete Momente des Antriebsmotors zuverlässig aus. Zudem genügt es in diesem Fall, wenn die Getriebesteuerungseinrichtung lediglich auf die ohnehin anzusteuernden Aktuatoren der Reibkupplung zwischen Antriebsmotor und Getriebe einwirkt und - sofern diese Aufgabe nicht automatisch durch die Motorsteuerung übernommen wird - eine entsprechende Veränderung der Ansteuerung des Antriebsmotors veranlasst.

Eine genaue Ermittlung und Berücksichtigung eines durch den Antriebsmotor geleisteten oder abgenommenen Momentes kann dabei unterbleiben. Nicht zuletzt ermöglicht diese Variante eine besonders späte und damit sehr aktuelle Ermittlung einer fahrwiderstandsproportionalen Größe, die Einfluss auf den zu wählenden optimalen Getriebegang hat. Dies garantiert auch bei stark wechselnden Betriebsbedingungen, wie sie etwa auf Baustellen anzutreffen sind, eine besonders aktuelle Auswahl des Zielgangs.

Eine weitere Ausgestaltung des Verfahrens gemäß der Erfindung sieht vor, dass die Getriebesteuerungseinrichtung als Zugkraftreduzierungsdaten, aus denen eine Veränderung der Fahrgeschwindigkeit des Fahrzeugs als Reaktion auf die Zugkraftreduzierung abgeleitet werden kann, eine Differenzdrehzahl zwischen einem ersten Zeitpunkt kurz vor Einleitung der Zugkraftreduzierung und einem zweiten Zeitpunkt bei erfolgter Zugkraftreduzierung ermittelt. Diese Drehzahldifferenz kann grundsätzlich an einer beliebigen Welle abgenommen werden, solange diese für den relevanten Zeitraum ein zumindest weitgehend zur Fahrgeschwindigkeit des Fahrzeugs proportionales Verhalten aufweist.

Da für den Antriebsmotor stets ohnehin hochwertige Sensoren zur Ermittlung der Drehzahl vorhanden sind, ist es unter dem Gesichtspunkt der Mehrfachnutzung von Sensoren vorteilhaft, wenn die Getriebesteuerungseinrichtung die Differenzdrehzahl an einer zur Motordrehzahl in einem festen Drehzahlverhältnis stehenden Welle ermittelt. Dabei ist es selbstverständlich unerheblich, ob die konkret ermittelte Drehzahl die einer z.B. Kurbelwelle, einer Nockenwelle; einer Abtriebswelle des Antriebsmotors oder eines mit der Abtriebswelle gekoppelten Kupplungsbauteils ist. Durch die unmittelbare oder mittelbare Berücksichtigung der Veränderung der Motordrehzahl kann jedenfalls die Ermittlung der Geschwindigkeitsreaktion des Fahrzeugs auf eine Zugkraftreduzierung besonders früh beginnen, und deshalb bei zeitkritischen Schaltvorgängen die Gesamtschaltzeit verkürzen.

Zur Bestimmung möglichst aktueller Drehzahl-Differenzwerte ist es dabei wünschenswert, dass die Getriebesteuerungseinrichtung als ersten Zeitpunkt einen Zeitpunkt unmittelbar vor der Einleitung der Zugkraftreduzierung und als zweiten Zeitpunkt einen Zeitpunkt unmittelbar vor dem Öffnen einer zwischen Antriebsmotor und automatisiertem Schaltgetriebe befindlichen Kupplung wählt. Dabei wird der Begriff des Zeitpunktes unmittelbar vor dem Öffnen der Kupplung so verstanden, dass die ermittelte Drehzahl zum Zeitpunkt des Öffnens der Kupplung die notwendige eindeutige Beziehung zu der Fahrgeschwindigkeit des Fahrzeugs aufweist. Bei einer nicht nur unwesentlich durchrutschenden Kupplung ist dies zwar grundsätzlich möglich, erfordert aber einen in den meisten Fällen unverhältnismäßig großen Berechnungsaufwand.

Neben der Bildung eines arithmetischen Mittelwertes zwischen einer Start- und einer Enddrehzahl ist es in jedem Fall möglich und häufig zur Verbesserung des Ergebnisses auch sinnvoll, wenn die Getriebesteuerungseinrichtung die Differenzdrehzahl unter Berücksichtigung des zeitlichen Verlaufes der Drehzahl ermittelt. Dies kann durch eine einfache Integration über die Zeit oder auch durch eine über die Zeit veränderliche Gewichtung erfolgen.

Insbesondere eine stärkere Gewichtung zeitlich jüngerer Messwerte erscheint zur Ermittlung möglichst optimaler Zielgänge bei sich schnell ändernden Betriebsbedingungen vorteilhaft zu sein. Zur Verbesserung der Genauigkeit des Verfahrens wird daher vorgeschlagen, dass die Getfiebesteuerungseinrichtung die Differenzdrehzahl unter Berücksichtigung eines zeitlichen Verlaufes der Drehzahl ermittelt und/oder regelbasierte Korrekturen vornimmt. Beispielsweise kann so eine verlängerte Schaltzeit bei bestimmten Schaltvorgängen durch eine entsprechende Korrektur der Berechnungsvorschriften für eine gewichtete Differenzdrehzahl berücksichtigt werden.

Im Folgenden wird eine Getriebesteuerungseinrichtung zur Durchführung des Verfahrens gemäß zumindest einer der vorhergehend beschriebenen Ausführungsformen vorgestellt.

Diese Getriebesteuerungseinrichtung weist neben den üblicherweise bei Getriebesteuerungen anzutreffenden Elementen und Verbindungen, die hier nicht weiter erläutert werden müssen, zur Erfüllung der zugedachten und zuvor beschriebenen Funktion zumindest einen Signal-Ausgang zur Auslösung einer Zugkraftreduzierung und zumindest einen Signal-Eingang zur Ermittlung einer fahrgeschwindigkeitsproportionalen Größe auf. Weiter ist eine Ermittlungsvorrichtung zur Ermittlung einer mit dem Fahrwiderstand des Fahrzeugs direkt korrelierenden Fahrwiderstandsgröße vorgesehen. Schließlich ist die Getriebesteuerungseinrichtung so aufgebaut, dass die ermittelte Fahrwiderstandsgröße bei der Wahl des zu aktivierenden Ganges von der Getriebesteuerungseinrichtung herangezogen wird.

Dabei ist es möglich und wird bevorzugt, dass die Getriebesteuerungseinrichtung nach der Ermittlung des Fahrwiderstandes einen Gang wählt, welcher z.B. eine um einen bestimmten Faktor über der Konstantleistung liegende Motorleistung bei der dann vorliegenden Drehzahl des Antriebsmotors liefern kann, und zudem weitere Randbedingungen erfüllt, wie z.B. einen möglichst geringen Kraftstoffverbrauch oder eine möglichst geringe Lärm- oder Schadstoffemission.

Zur Minimierung der Gesamtzeit der Zugkraftreduzierung kann jedoch auch vorgesehen sein, dass schon vor dem Auslösen der Zugkraftreduzierung ein Zielgang auf herkömmliche Weise ausgewählt und eventuell auch zum Schalten vorbereitet wird. In diesem Fall dient die Ermittlung des Fahrwiderstandes der Überprüfung bzw. Verifizierung des ausgewählten Ganges.

Zur Ermittlung der benötigten Daten über die Geschwindigkeitsänderung des Fahrzeugs als Reaktion auf die Reduzierung oder Unterbrechung der Zugkraft bieten sich drei unterschiedliche Bereiche an, die jeweils spezifische Vorteile bieten. Diese werden im Folgenden näher erläutert.

In einer ersten Variante der erfindungsgemäßen Getriebesteuerungseinrichtung ist vorgesehen, dass der Signal-Eingang zur Ermittlung einer fahrgeschwindigkeitsproportionalen Größe mit einem Drehzahlsensor verbunden ist, der eine Drehzahl in einem Bereich zwischen einer antriebsmotorzugewandten Seite einer zwischen einem Antriebsmotor sowie dem automatisierten Schaltgetriebe befindlichen Kupplung und einer Abtriebswelle eines Antriebsmotors ermitteln sowie an die Getriebesteuerungseinrichtung ausgeben kann.

Dies ermöglicht eine Erfassung der Verzögerung des Fahrzeugs beispielsweise direkt über die Änderung der Motordrehzahl. Weiter ist eine Erfassung der Geschwindigkeitsreaktion zu einem sehr frühen Zeitpunkt möglich, so dass für eine Ermittlung des optimalen Zielganges besonders viel Zeit verbleibt, ohne dass sich die Schaltzeit insgesamt verlängert. Schließlich kann die Zeitspanne der Zugkraftreduzierung bei Bedarf, etwa wenn eine unerwartet starke Verzögerung festgestellt wird, sehr kurz gehalten werden.

Eine zweite Variante sieht vor, dass der Signal-Eingang zur Ermittlung einer fahrgeschwindigkeitsproportionalen Größe mit einem Drehzahlsensor verbunden ist, der eine Drehzahl in einem Bereich zwischen einer getriebezugewandten Seite einer zwischen dem Antriebsmotor und dem automatisierten Schaltgetriebe befindlichen Kupplung sowie einer Eingangswelle des automatisiertem Schaltgetriebe ermitteln und an die Getriebesteuerungseinrichtung ausgeben kann.

Dies ermöglicht eine vollständige Zugkraftunterbrechung durch z.B. ein Öffnen der Kupplung und somit eine sehr einfache Ermittlung der tatsächlich auf den Fahrwiderstand zurückzuführenden Verlangsamung des Fahrzeugs.

Eine dritte Variante sieht schließlich vor, dass der Signal-Eingang zur Ermittlung der fahrgeschwindigkeitsproportionalen Größe mit einem Drehzahlsensor verbunden ist, der eine Drehzahl in einem Bereich zwischen einer Ausgangswelle des automatisierten Schaltgetriebes sowie einem angetriebenen Rad des Fahrzeugs ermitteln und an die Getriebesteuerungseinrichtung ausgeben kann.

Dies bietet neben den vorstehend beschriebenen Vorteilen die Möglichkeit, ohnehin im Rahmen z.B. eines ABS-Systems vorhandene Drehzahlsensoren zu nutzen, und zudem auch noch zu einem besonders späten Zeitpunkt relevante Informationen über die Änderung der Geschwindigkeit des Fahrzeugs zu ermitteln und auszuwerten. So ist es im Extremfall möglich, dass sogar während des Einlegens eines zuvor ermittelten Zielganges aufgrund einer eingetretenen Änderung der Fahrzeugverzögerung ein anderer als der ursprünglich gewählte Zielgang ausgewählt wird.

Für alle drei Varianten ist der Vollständigkeit halber zu erwähnen, dass die gewählten Ortsbezeichnungen für die Anordnung des Drehzahlsensors selbstverständlich im Sinne der technischen Funktionen der Bauteile zu verstehen sind. Wenn etwa von einem Bereich bis zu einer Antriebswelle des Antriebsmotors oder des automatisierten Schaltgetriebes die Rede ist, so sollen selbstverständlich Drehzahlveränderungeri von Elementen, die zu diesen Wellen in einem festen und bekannten Verhältnis stehen, mit in den Schutzbereich fallen. Beispielsweise ist die Verwendung einer Nockenwellendrehzahl eine zur Verwendung der Kurbelwellendrehzahl äquivalente Lösung.

Abschließend sei angemerkt, dass das erfindungsgemäße Verfahren und die entsprechende Vorrichtung hierfür vorteilhaft bei allen Straßenfahrzeugen angewendet werden können. Dies schließt auch Kettenfahrzeuge und andere Fahrzeugtypen mit ein. Besondere Vorteile bietet die Erfindung dabei immer dort, wo sie zur Steuerung eines automatisierten Schaltgetriebes eines Fahrzeugs mit einer bei voller Zuladung geringen maximalen auf das Fahrzeuggewicht bezogenen Leistung vorgesehen ist. Insbesondere bei Schwerlastfahrzeugen im Baustellenbetrieb stellt das eingangs beschriebene Problem einer Zugkraftunterbrechung an einer starken Steigung mit anschließender Fehlschaltung ein erhebliches Problem dar, das mit Hilfe der hier vorgestellten Erfindung auf einfache und elegante Weise gelöst werden kann.

Eine Kombination der vorliegenden Erfindung mit bekannten weiteren Steuerungsverfahren und Vorrichtungen, insbesondere eine Kombination mit den vielfältigen bekannten Möglichkeiten der Einbeziehung verschiedener weiterer Parameter, insbesondere des Antriebsmotors und der Fahrpedalstellung bzw. deren zeitlicher Verläufe liegen selbstverständlich im Rahmen der Erfindung.

Die Erfindung lässt sich anhand eines Ausführungsbeispiels weiter erläutern. Dazu ist der Beschreibung eine Zeichnung beigefügt. Diese zeigt ein Ablaufdiagramm eines erfindungsgemäßen Verfahrens in stark vereinfachter Form. Es sei hier von einer Drehzahlmessung an der Abtriebswelle des Antriebsmotors ausgegangen.

Im Verfahrensschritt S1 überprüft die Getriebesteuerungseinrichtung, ob eine Schaltentscheidung ansteht. Sofern ein diesbezüglicher Kennwert auf den Wert 1 gesetzt ist, bedeutet dies, dass eine Schaltung vorgenommen werden soll. Eine diesbezügliche 8ejahung der Abfrage "Schaltentscheidung" kann aufgrund von Überschreitungen von absoluten Grenzwerten der Fall sein, etwa wenn die Drehzahl eines Verbrennungsmotors eine obere oder untere Drehzahlgrenze überschreitet. Neben diesen absoluten Grenzwerten kommen hier selbstverständlich auch abgeleitete Grenzwerte in Betracht, die sich beispielsweise aus der Stellung des Fahrpedals in Relation zur Fahrgeschwindigkeit oder zu dem vom Antriebsmotor bereistellbaren Drehmoment ergeben.

Daneben kann der Kennwert der Variable "Schaltentscheidung" beispielsweise auch auf Grund einer manuellen Eingabe eines Gangwechselwunsches oder beim Vorliegen bestimmter anderer Bedingungen auf den Kennwert = 1 gesetzt werden. Es ist sogar möglich, dass die Variable "Schaltentscheidung" in bestimmten Betriebsbereichen des Antriebsmotors, für die nicht für alle Fahrwiderstände ein optimaler Gang angegeben werden kann, nach Ablauf einer bestimmten Zeitspanne auf den Kennwert = 1 gesetzt wird.

Wenn die Variable "Schaltentscheidung" den Kennwert = 1 besitzt, wird im Schritt S2 das Motordrehmoment reduziert. Hierfür werden zunächst die relevanten aktuellen Werte abgespeichert. Diese erlauben unter anderem eine schnelle Rückkehr zum Ausgangszustand. Dabei wird zumindest die Drehzahl des Antriebsmotors n_mot = n_mot_start, die Fahrpedalstellung und die aktuelle Getriebeübersetzung abgespeichert.

Anschließend wird in Schritt S3 das Getriebe dafür vorbereitet, in die Neutralstellung geschaltet zu werden.

Sobald Sensoren die Neutralstellung des Getriebes melden oder die Getriebesteuerung aus anderen Gründen - im einfachsten Fall nach Verstreichen einer gewissen Zeitspanne - davon ausgehen kann, dass sich das Getriebe in der Neutralstellung befindet, wird in Verfahrensschritt S4 die Differenzdrehzahl delta_n_mot zwischen der in Schritt S2 gespeicherten Motordrehzahl n_mot_start zum Zeitpunkt des Starts der Drehmomentreduzierung und der Motordrehzahl n_mot_end zum Zeitpunkt unmittelbar vor der Rückmeldung des Getriebes über die Trennung der Drehmomentverbindung zwischen den angetriebenen Rädern des Fahrzeugs und dem Antriebsmotor gebildet, der hier als Zeitpunkt Neutral = 1 bezeichnet ist.

Auf der Grundlage dieser Drehzahldifferenz delta_n_mot ermittelt die Getriebesteuerungseinrichtung den einzulegenden Zielgang. Dabei werden selbstverständlich weitere übliche Parameter berücksichtigt. Hierzu zählen insbesondere die Position des Fahrpedals alpha_Fahrpedal als Ausdruck eines Geschwindigkeits- bzw. Beschleunigungswunsches des Fahrers, und beispielsweise Daten über die Übersetzungsverhältnisse der einzelnen Gänge sowie Kennfelder oder sonstige Daten über Kraftstoffverbrauch, Drehzahl und Drehmoment des Antriebsmotors bei der Auswahl des jeweiligen Ganges bzw. unter den sich jeweils einstellenden Motordrehzahlen und geforderten Motordrehmomenten.

Es sei darauf hingewiesen dass unter der Voraussetzung, dass die Getriebesteuerungseinrichtung letztlich nicht den ursprünglich eingelegten Gang erneut aktiviert, keine im Vergleich zu einem herkömmlichen automatisierten Gangwechsel zusätzliche oder verlängerte Zugkraftreduzierung auftritt. Für den Fall, dass der ursprünglich aktive Gang als Zielgang gewählt wird, wäre jedoch bei herkömmlichen Getriebesteuerungseinrichtungen mit einer erheblich längeren Zugkraftunterbrechung durch mehrmaliges Schalten zu rechnen.

### Bezugszeichen

- S1 - S5: Schritte im Ablaufplan
- n_mot: Drehzahl der Abtriebswelle des Antriebsmotors
- n_mot_start: Drehzahl der Abtriebswelle des Antriebsmotors zum Zeitpunkt von Schritt S2
- n_mot_end: Drehzahl der Abtriebswelle des Antriebsmotors zum Zeitpunkt Neutral = 1
- delta_n_mot: Drehzahldifferenz zwischen n_mot_start und n_mot_end
- alpha_Fahrpedal: Auslenkung des Fahrpedals
- Y: Yes; Bedingung erfüllt
- N: No; Bedingung nicht erfüllt

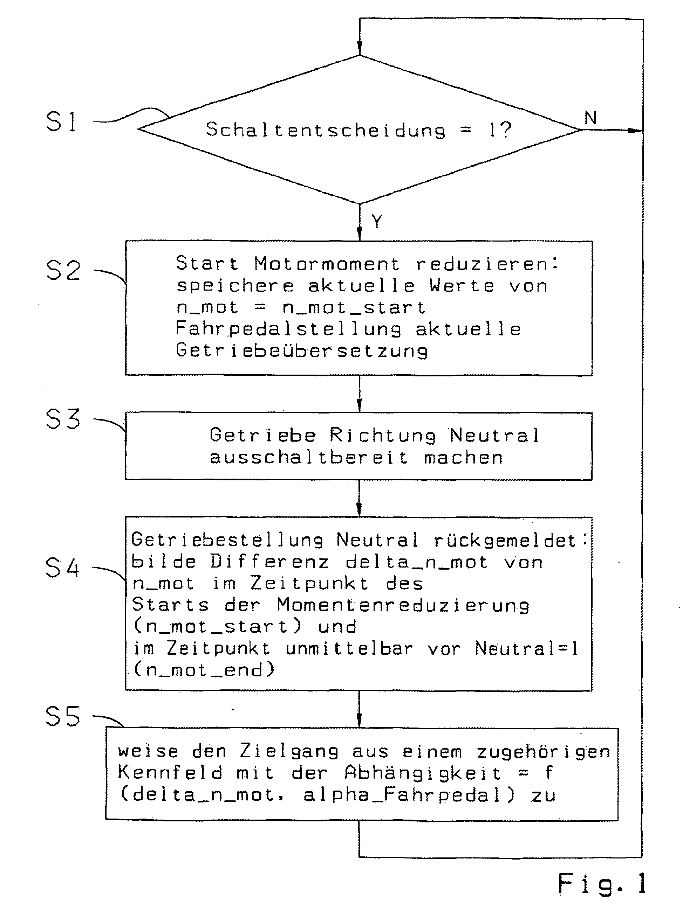

## Patentansprüche

1. Verfahren zur Steuerung eines automatisierten Schaltgetriebes, bei dem eine Getriebesteuerungseinrichtung vorgesehen ist, welche auf der Grundlage von Eingangssignalen an geeignete Aktuatoren Stellsignale ausgibt, die eine Schaltsequenz des automatisierten Schaltgetriebes auslösen, **dadurch**
**gekennzeichnet,**
**dass** die Getriebesteuerungseinrichtung zunächst auf der Grundlage der Eingangssignale entscheidet, ob eine Zugkraftreduzierung der angetriebenen Räder des Fahrzeugs ausgelöst werden soll,
**dass** die Getriebesteuerungseinrichtung bei positiver Entscheidung Signale ausgibt, die eine definierte Zugkraftreduzierung der angetriebenen Räder zur Folge haben,
**dass** die Getriebesteuerungseinrichtung dann Zugkraftreduzierungsdaten einliest, aus denen eine Veränderung der Fahrgeschwindigkeit des Fahrzeugs als Reaktion auf die Zugkraftreduzierung abgeleitet werden kann,
dann aus den Zugkraftreduzierungsdaten eine mit dem aktuellen Fahrwiderstand des Fahrzeugs direkt korrelierende Fahrwiderstandsgröße bildet,
und diese Fahrwiderstandsgröße zur Wahl eines Zielganges heranzieht.

2. Verfahren nach Anspruch 1, **dadurch gekennzeichnet, dass** die Zugkraftreduzierung eine Zugkraftunterbrechung ist.

3. Verfahren nach zumindest einem der Ansprüche 1 oder 2, **dadurch gekennzeichnet, dass** die Getriebesteuerungseinrichtung die Zugkraftreduzierung durch Veranlassung einer Verringerung der pro Zeit einer Antriebsmaschine zugeführten Energiemenge auslöst.

4. Verfahren nach Anspruch 3, **dadurch gekennzeichnet, dass** die Antriebsmaschine eine Verbrennungskraftmaschine ist und die Verringerung der pro Zeit zugeführten Energiemenge durch eine Reduzierung der zugeführten Kraftstoffmenge erfolgt.

5. Verfahren nach Anspruch 4, **dadurch gekennzeichnet, dass** die Antriebsmaschine ein Dieselmotor oder ein Ottomotor ist, und die Verringerung der pro Zeit zugeführten Energiemenge durch eine Reduzierung der Einspritzmenge erfolgt.

6. Verfahren nach Anspruch 4 oder 5, **dadurch gekennzeichnet, dass** die Getriebesteuerungseinrichtung die Zugkraftreduzierung der Antriebsmaschine durch eine Verstellung des Zündwinkels und/oder durch eine Veränderung der Einspritzzeit und/oder durch eine Veränderung der Anzahl der befeuerten Zylinder auslöst.

7. Verfahren nach wenigstens einem der vorherigen Ansprüche, **dadurch gekennzeichnet, dass** die Getriebesteuerungseinrichtung die Zugkraftreduzierung der Antriebsmaschine durch Öffnen einer schaltbaren Kupplung zwischen der Antriebsmaschine und dem automatisierten Schaltgetriebe des Fahrzeugs bewirkt.

8. Verfahren nach wenigstens einem der vorherigen Ansprüche, **dadurch gekennzeichnet, dass** die Getriebesteuerungseinrichtung als Zugkraftreduzierungsdaten, aus denen eine Veränderung der Fahrgeschwindigkeit des Fahrzeugs als Reaktion auf die Zugkraftreduzierung abgeleitet werden kann, eine Differenzdrehzahl zwischen einem ersten Zeitpunkt vor Einleitung der Zugkraftreduzierung und einem zweiten Zeitpunkt bei erfolgter Zugkraftreduzierung ermittelt.

9. Verfahren nach Anspruch 8, **dadurch gekennzeichnet, dass** die Getriebesteuerungseinrichtung die Differenzdrehzahl an einer zur Motordrehzahl in einem festen Drehzahlverhältnis stehenden Welle ermittelt.

10. Verfahren nach wenigstens einem der Ansprüche 8 oder 9, **dadurch gekennzeichnet, dass** die Getriebesteuerungseinrichtung als den ersten Zeitpunkt einen Zeitpunkt unmittelbar vor Einleitung der Zugkraftreduzierung und als zweiten Zeitpunkt einen Zeitpunkt unmittelbar vor dem Öffnen einer zwischen Antriebsmotor und dem automatisiertem Schaltgetriebe befindlichen Kupplung wählt.

11. Verfahren nach wenigstens einem der vorhergehenden Ansprüche, **dadurch gekennzeichnet, dass** die Getriebesteuerungseinrichtung die Differenzdrehzahl unter Berücksichtigung eines zeitlichen Verlaufes der Drehzahl ermittelt und/oder regelbasierte Korrekturen ermittelt.

12. Getriebesteuerungseinrichtung zur Durchführung des Verfahrens gemäß zumindest einem der vorhergehenden Ansprüche, **dadurch gekennzeichnet, dass** die Getriebesteuerungseinrichtung zumindest einen Signal-Ausgang zur Auslösung einer Zugkraftreduzierung und zumindest einen Signal-Eingang zur Ermittlung einer fahrgeschwindigkeitsproportionalen Größe umfasst, eine Ermittlungsvorrichtung zur Ermittlung einer mit dem Fahrwiderstand des Fahrzeugs direkt korrelierenden Fahrwiderstandsgröße aufweist, und weiter diese Fahrwiderstandsgröße von der Getriebesteuerungseinrichtung bei der Wahl des zu aktivierenden Ganges heranziehbar ist.

13. Getriebesteuerungseinrichtung nach Anspruch 12, **dadurch gekennzeichnet, dass** der Signal-Eingang zur Ermittlung einer fahrgeschwindigkeitsproportionalen Größe mit einem Drehzahlsensor verbunden ist, der eine Drehzahl im Bereich zwischen einer getriebeabgewandten Seite einer zwischen einem Antriebsmotor und dem automatisiertem Schaltgetriebe befindlichen Kupplung sowie einer Abtriebswelle eines Antriebsmotors ermitteln und an die Getriebesteuerungseinrichtung ausgeben kann.

14. Getriebesteuerungseinrichtung nach Anspruch 12, **dadurch gekennzeichnet, dass** der Signal-Eingang zur Ermittlung einer fahrgeschwindigkeitsproportionalen Größe mit einem Drehzahlsensor verbunden ist, der eine Drehzahl im Bereich zwischen einer getriebezugewandten Seite einer zwischen Antriebsmotor und automatisiertem Schaltgetriebe befindlichen Kupplung sowie einer Eingangswelle des automatisierten Schaltgetriebes ermitteln und an die Getriebesteuerungseinrichtung ausgeben kann.

15. Getriebesteuerungseinrichtung nach Anspruch 12, **dadurch gekennzeichnet, dass** der Signal-Eingang zur Ermittlung der fahrgeschwindigkeitsproportionalen Größe mit einem Drehzahlsensor verbunden ist, der eine Drehzahl im Bereich zwischen einer Ausgangswelle des automatisiert ten Schaltgetriebes und einem angetriebenen Rad ermitteln sowie an die Getriebesteuerungseinrichtung ausgeben kann.

16. Getriebesteuerungseinrichtung nach zumindest einem der Ansprüche 12 bis 15, **dadurch gekennzeichnet , dass** diese zur Steuerung eines automatisierten Schaltgetriebes eines Fahrzeugs mit einer bei voller Zuladung geringen maximalen und auf das Fahrzeuggewicht bezogenen Leistung vorgesehen ist.

## Claims

1. Method for controlling an automated change-speed gearbox in which a gearbox control device is provided, this gearbox control device outputting actuating signals to suitable actuators on the basis of input signals, these actuating signals triggering a shifting sequence for the automated change-speed gearbox, **characterized**
**in that** the gearbox control device initially decides, on the basis of the input signals, whether a reduction in tractive force of the driven wheels of the vehicle should be triggered,
**in that** the gearbox control device outputs signals which result in a defined reduction in tractive force of the driven wheels in the event of a positive decision,
**in that** the gearbox control device then reads in data relating to the reduction in tractive force, it being possible for a change in the driving speed of the vehicle in response to the reduction in tractive force to be derived from the said data,
a driving resistance variable which is directly correlated with the current driving resistance of the vehicle then being formed from the data relating to the reduction in tractive force, and this driving resistance variable being used to select a target gear.

2. Method according to Claim 1, **characterized in that** the reduction in tractive force is an interruption in tractive force.

3. Method according to at least one of Claims 1 and 2, **characterized in that** the gearbox control device triggers the reduction in tractive force by prompting a reduction in the quantity of energy supplied to a drive machine per unit time.

4. Method according to Claim 3, **characterized in that** the drive machine is an internal combustion engine, and the quantity of energy supplied per unit time is reduced by reducing the quantity of fuel supplied.

5. Method according to Claim 4, **characterized in that** the drive machine is a diesel engine or a spark-ignition engine, and the quantity of energy supplied per unit time is reduced by reducing the injection quantity.

6. Method according to Claim 4 or 5, **characterized in that** the gearbox control device triggers the reduction in tractive force of the drive machine by adjusting the ignition angle and/or by changing the injection time and/or by changing the number of fired cylinders.

7. Method according to at least one of the preceding claims, **characterized in that** the gearbox control device causes the reduction in tractive force of the drive machine by opening a shiftable clutch between the drive machine and the automated change-speed gearbox of the vehicle.

8. Method according to at least one of the preceding claims, **characterized in that** the gearbox control device determines, as the data relating to the reduction in tractive force, it being possible for a change in the driving speed of the vehicle in response to the reduction in tractive force to be derived from the said data, a differential rotation speed between a first time before the reduction in tractive force is initiated and a second time at which the reduction in tractive force has taken place.

9. Method according to Claim 8, **characterized in that** the gearbox control device determines the differential rotation speed at a shaft which has a fixed rotation speed ratio in relation to the motor rotation speed.

10. Method according to at least one of Claims 8 and 9, **characterized in that** the gearbox control device selects a time immediately before the reduction in tractive force is initiated as the first time and a time immediately before a clutch which is located between the drive motor and the automated change-speed gearbox is opened as the second time.

11. Method according to at least one of the preceding claims, **characterized in that** the gearbox control device determines the differential rotation speed taking into account a time profile of the rotation speed and/or determines regulation-based corrections.

12. Gearbox control device for carrying out the method according to at least one of the preceding claims, **characterized in that** the gearbox control device comprises at least one signal output for triggering a reduction in tractive force and at least one signal input for determining a driving speed-proportional variable, has a determination device for determining a driving resistance variable which is directly correlated with the driving resistance of the vehicle, and furthermore this driving resistance variable can be used by the gearbox control device when selecting the gear to be activated.

13. Gearbox control device according to Claim 12, **characterized in that** the signal input for determining a driving speed-proportional variable is connected to a rotation speed sensor which can determine a rotation speed in the region between a side, which is averted from the gearbox, of a clutch, which is located between a drive motor and the automated change-speed gearbox, and an output shaft of a drive motor and can output the said rotation speed to the gearbox control device.

14. Gearbox control device according to Claim 12, **characterized in that** the signal input for determining a driving speed-proportional variable is connected to a rotation speed sensor which can determine a rotation speed in the region between a side, which faces the gearbox, of a clutch, which is located between the drive motor and the automated change-speed gearbox, and an input shaft of the automated change-speed gearbox and can output the said rotation speed to the gearbox control device.

15. Gearbox control device according to Claim 12, **characterized in that** the signal input for determining the driving speed-proportional variable is connected to a rotation speed sensor which can determine a rotation speed in the region between an output shaft of the automated change-speed gearbox and a driven wheel and also can output the said rotation speed to the gearbox control device.

16. Gearbox control device according to at least one of Claims 12 to 15, **characterized in that** it is provided for controlling an automated change-speed gearbox of a vehicle which has a low maximum power at full payload, this power being related to the weight of the vehicle.

## Revendications

1. Procédé de commande d'une boîte de vitesses automatique, selon lequel il est prévu un dispositif de commande de boîte de vitesses qui, sur la base de signaux d'entrée, délivre des signaux de positionnement à des actionneurs appropriés qui déclenchent une séquence de changement de rapport de la boîte de vitesses automatique, **caractérisé en ce**
**que** le dispositif de commande de boîte de vitesses décide tout d'abord, en se basant sur les signaux d'entrée, s'il faut déclencher une réduction de la force de traction des roues motrices du véhicule,
**que** le dispositif de commande de boîte de vitesses, en cas de décision positive, délivre des signaux qui ont pour conséquence une réduction définie de la force de traction des roues motrices,
**que** le dispositif de commande de boîte de vitesses charge ensuite des données de réduction de la force de traction à partir desquelles il est possible de dériver une modification de la vitesse de déplacement du véhicule en tant que réaction à la réduction de la force de traction, forme ensuite, à partir des données de réduction de la force de traction, une grandeur de résistance au déplacement en corrélation directe avec la résistance au déplacement actuelle du véhicule et utilise cette grandeur de résistance au déplacement pour choisir un rapport cible.

2. Procédé selon la revendication 1, **caractérisé en ce que** la réduction de la force de traction est une interruption de la force de traction.

3. Procédé selon au moins l'une des revendications 1 ou 2, **caractérisé en ce que** le dispositif de commande de boîte de vitesses déclenche la réduction de la force de traction en provoquant une diminution de la quantité d'énergie acheminée par unité de temps à un groupe propulseur.

4. Procédé selon la revendication 3, **caractérisé en ce que** le groupe propulseur est un moteur à combustion interne et la diminution de la quantité d'énergie acheminée par unité de temps s'effectue en réduisant la quantité de carburant acheminée.

5. Procédé selon la revendication 4, **caractérisé en ce que** le groupe propulseur est un moteur diesel ou un moteur à allumage commandé et la diminution de la quantité d'énergie acheminée par unité de temps s'effectue en réduisant la quantité injectée.

6. Procédé selon la revendication 4 ou 5, **caractérisé en ce que** le dispositif de commande de boîte de vitesses déclenche la réduction de la force de traction du groupe propulseur par un réglage de l'angle d'allumage et/ou par une modification du temps d'injection et/ou par une modification du nombre de cylindres allumés.

7. Procédé selon au moins l'une des revendications précédentes, **caractérisé en ce que** le dispositif de commande de boîte de vitesses provoque la réduction de la force de traction du groupe propulseur en ouvrant un accouplement commandable entre le groupe propulseur et la boîte de vitesses automatique du véhicule.

8. Procédé selon au moins l'une des revendications précédentes, **caractérisé en ce que** le dispositif de commande de boîte de vitesses détermine en tant que données de réduction de la force de traction, desquelles peut être déduite une modification de la vitesse de déplacement du véhicule en réaction à la réduction de la force de traction, une vitesse de rotation différentielle entre un premier instant avant l'initiation de la réduction de la force de traction et un deuxième instant où la réduction de la force de traction a eu lieu.

9. Procédé selon la revendication 8, **caractérisé en ce que** le dispositif de commande de boîte de vitesses détermine la vitesse de rotation différentielle sur un arbre qui présente un rapport de vitesse de rotation fixe par rapport à la vitesse de rotation du moteur.

10. Procédé selon au moins l'une des revendications 8 ou 9, **caractérisé en ce que** le dispositif de commande de boîte de vitesses sélectionne comme premier instant un instant immédiatement avant l'initiation de la réduction de la force de traction et comme deuxième instant un instant immédiatement avant l'ouverture d'un accouplement qui se trouve entre le moteur de propulsion et la boîte de vitesses automatique.

11. Procédé selon au moins l'une des revendications précédentes, **caractérisé en ce que** le dispositif de commande de boîte de vitesses détermine la vitesse de rotation différentielle en tenant compte d'une évolution dans le temps de la vitesse de rotation et/ou détermine des corrections basées sur la régulation.

12. Dispositif de commande de boîte de vitesses pour mettre en oeuvre le procédé selon au moins l'une des revendications précédentes, **caractérisé en ce que** le dispositif de commande de boîte de vitesses comprend au moins une sortie de signal pour déclencher une réduction de la force de traction et au moins une entrée de signal pour déterminer une grandeur proportionnelle à la vitesse de déplacement, présente un dispositif de détermination pour déterminer une grandeur de résistance au déplacement en corrélation directe avec la résistance au déplacement du véhicule et cette grandeur de résistance au déplacement peut en outre être utilisée par le dispositif de commande de boîte de vitesses lors du choix du rapport à activer.

13. Dispositif de commande de boîte de vitesses selon la revendication 12, **caractérisé en ce que** l'entrée de signal destinée à déterminer une grandeur proportionnelle à la vitesse de déplacement est reliée à un détecteur de vitesse de rotation qui peut déterminer une vitesse de rotation dans la zone entre un côté à l'opposé de la boîte de vitesses d'un accouplement qui se trouve entre le moteur de propulsion et la boîte de vitesses automatique et un arbre de sortie du moteur de propulsion et peut la délivrer au dispositif de commande de boîte de vitesses.

14. Dispositif de commande de boîte de vitesses selon la revendication 12, **caractérisé en ce que** l'entrée de signal destinée à déterminer une grandeur proportionnelle à la vitesse de déplacement est reliée à un détecteur de vitesse de rotation qui peut déterminer une vitesse de rotation dans la zone entre un côté faisant face à la boîte de vitesses d'un accouplement qui se trouve entre le moteur de propulsion et la boîte de vitesses automatique et un arbre d'entrée de la boîte de vitesses automatique et peut la délivrer au dispositif de commande de boîte de vitesses.

15. Dispositif de commande de boîte de vitesses selon la revendication 12, **caractérisé en ce que** l'entrée de signal destinée à déterminer une grandeur proportionnelle à la vitesse de déplacement est reliée à un détecteur de vitesse de rotation qui peut déterminer une vitesse de rotation dans la zone entre un arbre de sortie de la boîte de vitesses automatique et une roue motrice et peut la délivrer au dispositif de commande de boîte de vitesses.

16. Dispositif de commande de boîte de vitesses selon au moins l'une des revendications 12 à 15, **caractérisé en ce que** celui-ci est prévu pour commander une boîte de vitesses automatique d'un véhicule avec une puissance maximale faible à pleine charge et en rapport avec le poids du véhicule.
